# FASCICULE DE BREVET EUROPEEN

(11) **EP 3 113 988 B1**
(45) Date de publication et mention de la délivrance du brevet: **29.11.2017**
(21) Numéro de dépôt: 15711259.0
(22) Date de dépôt: 27.02.2015
(51) Int. Cl.: B60R 25/24

(54) **PROCÉDÉ ET DISPOSITIF D'ENREGISTREMENT D'UN DISPOSITIF DE COMMANDE À DISTANCE D'UN VÉHICULE, À DURÉE D'ENREGISTREMENT VARIABLE**
VERFAHREN UND VORRICHTUNG ZUM REGISTRIEREN EINER FERNBEDIENUNG FÜR EIN FAHRZEUG, MIT VARIABLER REGISTRIERUNGSDAUER
METHOD AND SYSTEM FOR REGISTERING A REMOTE CONTROL DEVICE OF A VEHICLE WITH VARIABLE REGISTERING DURATION

(30) Priorité: 03.03.2014 FR 1451716
(43) Date de publication de la demande: 11.01.2017
(73) Titulaire: PSA Automobiles SA, 78300 Poissy (FR)
(72) Inventeur: LANOUE, Stephane, 77580 Coulommes (FR)
(74) Mandataire: Jeannin, Laurent Jean-Pierre
(86) Numéro de dépôt international: PCT/FR2015/050482
(87) Numéro de publication internationale: WO 2015/132514

(56) Documents cités:
- EP-A1- 0 816 192
- EP-A1- 0 856 624
- US-A- 5 422 632
- US-B1- 6 501 369

## Description

L'invention concerne les enregistrements de dispositifs de commande à distance dans des calculateurs de véhicules, éventuellement de type automobile.

On entend ici par « dispositif de commande à distance » tout équipement ou appareil associé à un identifiant et destiné, une fois qu'il a été enregistré (ou « appris ») dans un calculateur choisi d'un véhicule, de commander par voie d'ondes au moins une fonction offerte par ce dernier, comme par exemple la mise en fonctionnement du moteur et l'arrêt de fonctionnement de ce dernier, ou le verrouillage/déverrouillage d'ouvrant(s). Par conséquent, il pourra s'agir de tout dispositif électronique nomade préalablement appris au (ou enregistré auprès du) véhicule et permettant de verrouiller/déverrouiller ses ouvrants et/ou son utilisation notamment pour le démarrage et l'arrêt du moteur du véhicule (clé électronique, badge de type main libre, équipement de communication non filaire tel qu'un téléphone mobile intelligent (ou « smartphone »).

Comme le sait l'homme de l'art, pour qu'un dispositif de commande (à distance) puisse être utilisé par un usager d'un véhicule, il faut qu'il ait été préalablement enregistré (ou appris) dans un calculateur choisi de ce véhicule. Pour ce faire, une méthode consiste à connecter un outil (ou boîtier) électronique externe, comme par exemple un boîtier de diagnostic, à une prise de diagnostic qui est connectée au réseau de communication auquel est également connecté le calculateur choisi. Puis, on doit coupler le dispositif de commande à enregistrer à cet outil. Puis, on doit établir un dialogue entre l'outil et le calculateur choisi afin que ce dernier effectue une procédure d'enregistrement destinée à enregistrer dans une mémoire l'identifiant du dispositif de commande après avoir procédé à une authentification de ce dernier, voir EP856624A. Hélas, il s'avère assez facile pour une personne malintentionnée de se procurer, d'une part, un outil (ou boîtier) électronique externe capable de dialoguer avec le calculateur choisi d'un véhicule, et, d'autre part, des dispositifs de commande compatibles avec ce véhicule. De ce fait, lorsqu'une personne malintentionnée veut voler un véhicule, il lui suffit de pénétrer dans le véhicule et de connecter son outil (ou boîtier) électronique externe à la prise de diagnostic afin de faire enregistrer un dispositif de commande qu'elle va alors utiliser pour commander le véhicule. C'est ce que l'on appelle le « vol à la souris ».

L'invention a donc pour but d'améliorer la situation.

Elle propose notamment à cet effet un procédé, destiné à permettre l'enregistrement de dispositif(s) de commande à distance, associé(s) à un identifiant et destiné(s) à commander un véhicule, auprès d'un calculateur de ce dernier, et comprenant une étape dans laquelle, en cas de présentation d'un dispositif de commande à distance et en présence d'au moins un identifiant enregistré et valide dans le calculateur, on rend non valide chaque identifiant enregistré et valide, puis, si le dispositif de commande à distance présenté est associé à un identifiant inconnu du calculateur, on enregistre cet identifiant dans ce dernier en effectuant une procédure d'enregistrement pendant une durée allongée prédéfinie, strictement supérieure à une durée d'une procédure d'enregistrement normale effectuée lorsqu'il n'y a aucun identifiant enregistré dans le calculateur.

En rendant notablement plus longue la procédure d'enregistrement d'un dispositif de commande à distance dont l'identifiant est inconnu du calculateur choisi d'un véhicule, on contraint une personne malintentionnée à demeurer plus longtemps dans ou à côté de ce véhicule avec son outil (ou boîtier) électronique externe connecté à la prise de diagnostic avant de pouvoir le voler « à la souris », ce qui est de nature à la dissuader plus fortement d'effectuer ce vol. La durée allongée est définie dans, et utilisée par, le calculateur du véhicule.

Le procédé selon l'invention peut comporter d'autres caractéristiques qui peuvent être prises séparément ou en combinaison, et notamment :
- la durée allongée prédéfinie peut être comprise entre environ quinze minutes et environ une heure. Par exemple, cette durée allongée prédéfinie peut être choisie égale à environ trente minutes ;
- dans l'étape, en cas de présentation d'un dispositif de commande à distance et en l'absence d'identifiant enregistré dans le calculateur, on peut enregistrer l'identifiant du dispositif de commande à distance présenté dans le calculateur en effectuant la procédure d'enregistrement normale ;
- dans l'étape, après avoir rendu non valide chaque identifiant enregistré et valide, on peut déterminer si le dispositif de commande à distance présenté est associé à un identifiant rendu non valide, et, dans l'affirmative, on peut effectuer une procédure de revalidation de manière à rendre de nouveau valide l'identifiant de ce dispositif de commande à distance présenté ;
   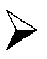 dans l'étape, en cas de présentation d'un nouveau dispositif de commande à distance après qu'une procédure de revalidation ait été effectuée, on peut enregistrer l'identifiant de ce nouveau dispositif de commande à distance présenté dans le calculateur en effectuant la procédure d'enregistrement normale.

L'invention propose également un dispositif d'enregistrement, propre à équiper un calculateur de véhicule et à enregistrer dans ce calculateur des dispositifs de commande à distance associés chacun à un identifiant et destinés à commander ce véhicule, et agencé, en cas de présentation d'un dispositif de commande à distance et en présence d'au moins un identifiant enregistré et valide dans le calculateur, pour rendre non valide dans ce dernier chaque identifiant enregistré et valide, puis, si le dispositif de commande à distance présenté est associé à un identifiant inconnu du calculateur, pour provoquer l'enregistrement de cet identifiant dans ce dernier par déclenchement d'une procédure d'enregistrement pendant une durée allongée prédéfinie, strictement supérieure à une durée d'une procédure d'enregistrement normale effectuée lorsqu'il n'y a aucun identifiant enregistré dans le calculateur.

L'invention propose également un calculateur, destiné à équiper un véhicule propre à être commandé par au moins un dispositif de commande à distance associé à un identifiant, et comprenant un dispositif d'enregistrement du type de celui présenté ci-avant.

L'invention propose également un véhicule, éventuellement de type automobile, propre à être commandé par au moins un dispositif de commande à distance associé à un identifiant et comprenant un calculateur du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un véhicule automobile équipé d'un calculateur comprenant un dispositif d'enregistrement selon l'invention et auquel est couplé temporairement, via une prise de diagnostic, un outil informatique externe lui-même couplé temporairement à un dispositif de à distance, et
- la figure 2 illustre schématiquement un exemple d'algorithme de mise en oeuvre d'un procédé d'enregistrement selon l'invention.

L'invention a notamment pour but de proposer un procédé d'enregistrement, et un dispositif d'enregistrement DE associé, destinés à permettre l'enregistrement de dispositifs de commande à distance DC dans un calculateur CS d'un véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule pouvant être commandé par un dispositif de commande à distance enregistré auprès d'un calculateur choisi qu'il comprend. Par conséquent, le véhicule V pourra être de type terrestre (y compris les engins de chantier et les véhicules agricoles), ou maritime (ou fluvial), ou encore aérien.

Par ailleurs, on considère dans ce qui suit, à titre d'exemple non limitatif, que les dispositifs de commande à distance DC à enregistrer sont des télécommandes portatives définissant des clés électroniques (ou « plips »). Mais l'invention n'est pas limitée à ce type de dispositif de commande à distance. Elle concerne en effet tout équipement ou appareil associé à un identifiant et destiné, une fois qu'il a été enregistré (ou « appris ») dans un calculateur choisi d'un véhicule, à commander par voie d'ondes au moins une fonction offerte par ce dernier, comme par exemple la mise en fonctionnement du moteur et l'arrêt de fonctionnement de ce dernier, ou le verrouillage/déverrouillage d'ouvrant(s) P. Par conséquent, il pourra s'agir de tout dispositif électronique nomade préalablement appris au (ou enregistré auprès du) véhicule et permettant de verrouiller/déverrouiller ses ouvrants et/ou son utilisation notamment pour le démarrage et l'arrêt du moteur du véhicule. Ainsi, il pourra s'agir d'une clé électronique, d'un badge de type main libre, ou d'un équipement de communication non filaire tel qu'un téléphone mobile intelligent (ou « smartphone »).

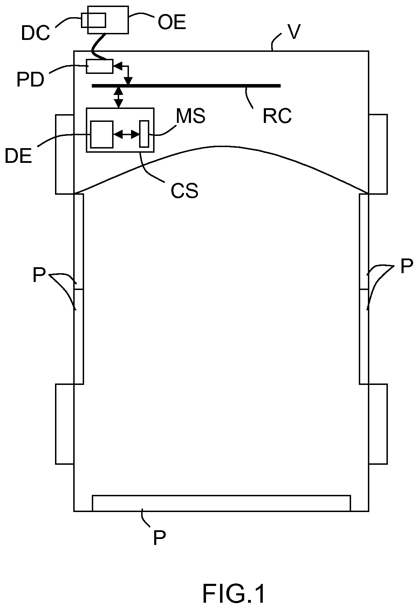

On a schématiquement et fonctionnellement représenté sur la figure 1 un véhicule automobile V (ici une voiture) comprenant un réseau de communication RC, éventuellement de type multiplexé, et auquel sont connectés un calculateur CS (équipé d'un dispositif d'enregistrement DE selon l'invention) et une prise de diagnostic PD à laquelle peut être connecté un outil (ou boîtier) électronique externe OE, éventuellement de diagnostic.

Le calculateur CS est chargé de stocker dans une mémoire MS l'identifiant de chaque dispositif de commande à distance DC qui a été enregistré auprès de lui par son dispositif d'enregistrement DE, ainsi que la valeur prise par une variable d'état d'utilisation de chaque identifiant (par exemple la valeur « 1 » lorsque l'identifiant est valide (ou utilisable) et la valeur « 0 » lorsque l'identifiant est non valide (ou « dévalidé » ou encore inutilisable). C'est donc lui qui est interrogé lorsque l'on doit vérifier si un dispositif de commande à distance DC qui est utilisé au voisinage de son véhicule V est autorisé à commander l'une au moins des fonctions offertes par ce dernier (V).

Ce calculateur CS peut, par exemple, être ce que l'homme de l'art appelle parfois un « calculateur habitacle » (ou Body Control Unit). Il est rappelé que ce dernier est un équipement électronique communicant qui est notamment chargé d'assurer l'interconnexion entre plusieurs bus de réseau(x) de communication embarqué(s) dans le véhicule V, des fonctionnalités de diagnostic, le contrôle du fonctionnement de la batterie et du démarreur (ou alterno-démarreur), et l'alimentation en énergie électrique des équipements électriques.

Comme indiqué précédemment, l'invention propose de mettre en oeuvre dans le véhicule V un procédé d'enregistrement destiné à permettre l'enregistrement de dispositifs de commande à distance DC dans son calculateur CS.

Un tel procédé peut être mis en oeuvre par le dispositif d'enregistrement DE. Comme indiqué plus haut, ce dispositif d'enregistrement DE fait partie du calculateur CS. Il peut donc être réalisé sous la forme de modules logiciels (ou informatiques ou encore « software »). Mais dans une variante de réalisation, il pourrait être réalisé sous la forme d'une combinaison de circuits électroniques (ou « hardware ») et de modules logiciels.

Le procédé d'enregistrement, selon l'invention, comprend une étape qui est mise en oeuvre chaque fois qu'un dispositif de commande à distance DC est présenté au calculateur CS, via un outil OE et la prise de diagnostic PD, en vue d'être enregistré. Cette étape consiste notamment, lorsque la situation précitée survient et que de surcroît le calculateur CS stocke dans sa mémoire MS au moins un identifiant enregistré et valide, à rendre non valide (au moyen du dispositif d'enregistrement DE) chaque identifiant enregistré et valide (stocké dans la mémoire MS). Pour ce faire, on ne supprime pas de la mémoire MS les identifiants stockés, mais on change la valeur de la variable d'état d'utilisation qui est associée à chaque identifiant stocké, afin qu'aucun identifiant ne puisse plus être utilisé (au moins temporairement).

Puis, si le dispositif de commande à distance DC présenté est associé à un identifiant qui est inconnu du calculateur CS, on (le dispositif d'enregistrement DE) enregistre cet identifiant dans la mémoire MS du calculateur CS en effectuant une procédure d'enregistrement pendant une durée allongée prédéfinie.

On entend ici par « durée allongée » une durée qui est strictement supérieure à la durée d'une procédure d'enregistrement normale qui est effectuée par le dispositif d'enregistrement DE lorsqu'il n'y a aucun identifiant enregistré dans la mémoire MS du calculateur CS.

Cette durée allongée prédéfinie peut être choisie aussi longue que l'on veut. On comprendra en effet que plus on augmente la durée de la procédure d'enregistrement d'un dispositif de commande à distance DC dont l'identifiant est inconnu du calculateur CS choisi d'un véhicule V, plus un voleur doit demeurer longtemps dans ou à côté de ce véhicule V avec son outil (ou boîtier) électronique externe OE connecté à la prise de diagnostic avant de pouvoir le voler « à la souris », ce qui est de nature à le dissuader plus fortement d'effectuer ce vol. Cependant, il est préférable que la durée allongée prédéfinie soit comprise entre environ quinze minutes et environ une heure, afin qu'elle ne pénalise pas trop les ateliers en usine ou en service après-vente qui peuvent être concernés dès lors qu'ils doivent intervenir sur un véhicule V dont le calculateur CS a déjà enregistré au moins un identifiant perdu et qu'un nouvel identifiant inconnu doit être enregistré. Par exemple, cette durée allongée prédéfinie peut être choisie égale à environ trente minutes. Cette dernière valeur de durée allongée est considérée comme très dissuasive en cas de vol à la souris, car il est habituellement considéré qu'un voleur ne reste que très rarement plus de cinq minutes à côté d'un véhicule qu'il veut voler.

On notera que pendant toute la procédure d'enregistrement l'outil OE doit demeurer connecté à la prise de diagnostic PD, ce qui augmente la probabilité qu'il soit repéré par un tiers ou que son utilisateur soit repéré par un tiers.

On notera également que l'allongement de la durée de la procédure d'enregistrement n'implique pas forcément que les différentes sous-étapes de cette dernière sont réalisées plus lentement (ou de façon temporisée). En effet, cela peut simplement avoir pour but de retarder l'enregistrement dans la mémoire MS de l'identifiant et/ou d'une valeur « valide » de la variable d'état d'utilisation qui est associée à cet identifiant.

On notera que dans l'étape du procédé, lorsqu'un dispositif de commande à distance DC est présenté et qu'aucun identifiant n'est enregistré dans la mémoire MS du calculateur CS, on (le dispositif d'enregistrement DE) peut avantageusement enregistrer l'identifiant de ce dispositif de commande à distance DC présenté dans le calculateur CS en effectuant la procédure d'enregistrement normale (c'est-à-dire sur une durée normale (non allongée)). On considère en effet ici que la probabilité que le véhicule V fasse l'objet d'un vol à la souris est quasi nulle lorsque ce véhicule V n'a pas encore été associé au moindre identifiant de dispositif de commande à distance DC.

On notera également que dans l'étape du procédé, après avoir rendu non valide chaque identifiant enregistré et valide, on (le dispositif d'enregistrement DE) peut avantageusement déterminer si le dispositif de commande à distance DC présenté est associé à un identifiant qui a été rendu non valide. Puis, dans l'affirmative, on (le dispositif d'enregistrement DE) effectue une procédure de revalidation de manière à rendre de nouveau valide l'identifiant de ce dispositif de commande à distance DC présenté. Dans la négative, cela signifie que l'identifiant est inconnu, et donc on effectue une procédure d'enregistrement allongée.

On notera également que dans l'étape du procédé, en cas de présentation d'un nouveau dispositif de commande à distance DC après qu'une procédure de revalidation ait été effectuée, on (le dispositif d'enregistrement DE) peut enregistrer l'identifiant de ce nouveau dispositif de commande à distance DC présenté dans la mémoire MS du calculateur CS en effectuant la procédure d'enregistrement normale. On considère en effet ici que la probabilité que le véhicule V fasse l'objet d'un vol à la souris est quasi nulle lorsqu'un identifiant enregistré mais non valide vient tout juste d'être revalidé dans ce véhicule V, car cela signifie que son usager disposait déjà d'un dispositif de commande à distance DC propre à le commander.

On notera également que lorsque l'outil OE est déconnecté avant la fin de la durée allongée, il est préférable que toutes les clés enregistrées et valides soient dévalidées et que la nouvelle clé présentée ne soit pas apprise (ou enregistrée). Cela permet de signaler une tentative ratée d'apprentissage de clé (du fait que plus aucune clé n'est fonctionnelle (ou valide)).

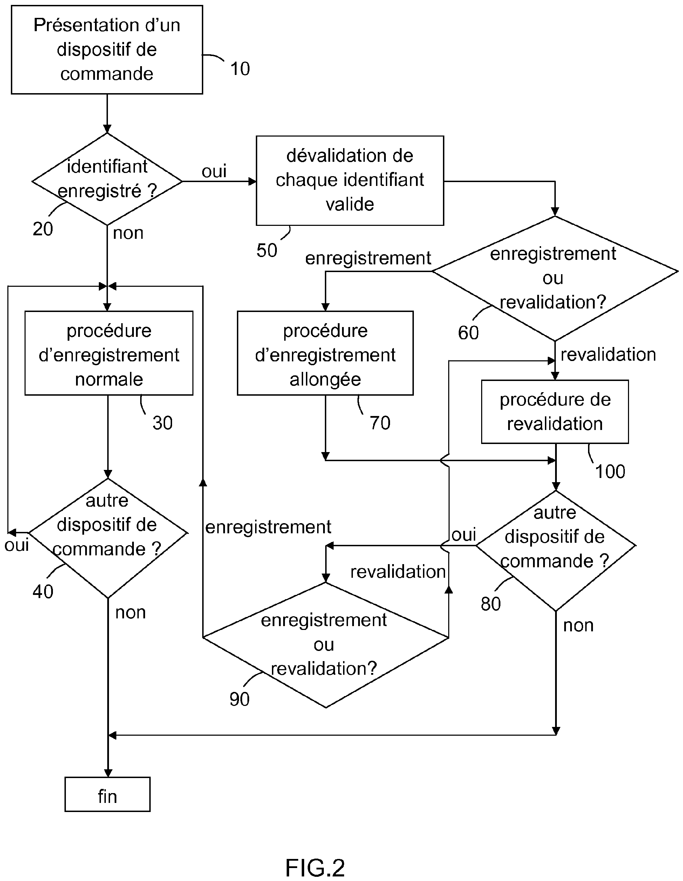

On a schématiquement illustré sur la figure 2 un exemple d'algorithme de mise en oeuvre d'un procédé d'enregistrement selon l'invention, comportant toutes les options décrites ci-avant.

Cet algorithme commence par une sous-étape 10 dans laquelle un dispositif de commande à distance DC est présenté au calculateur CS, via un outil OE et la prise de diagnostic PD, en vue d'être enregistré.

L'algorithme se poursuit par une sous-étape 20 dans laquelle on (le dispositif d'enregistrement DE) effectue un test pour déterminer si au moins un identifiant de dispositif de commande à distance DC est enregistré (et stocké) dans la mémoire MS du calculateur CS.

Si le résultat du test est négatif (et donc si aucun identifiant n'est enregistré dans la mémoire MS du calculateur CS), on (le dispositif d'enregistrement DE) effectue une sous-étape 30 consistant à enregistrer l'identifiant du dispositif de commande à distance DC présenté dans la mémoire du calculateur CS en effectuant la procédure d'enregistrement normale. L'identifiant est alors enregistré en association avec une valeur valide de variable d'état d'utilisation.

Puis, dans une sous-étape 40 on (le dispositif d'enregistrement DE) effectue un autre test pour déterminer si un nouveau dispositif de commande à distance DC a été présenté via l'outil OE et la prise de diagnostic PD.

Si le résultat du test est positif, on (le dispositif d'enregistrement DE) effectue de nouveau la sous-étape 30 pour enregistrer dans une durée normale l'identifiant du nouveau dispositif de commande à distance DC présenté en association avec une valeur valide de variable d'état d'utilisation.

Si le résultat du test est négatif, le procédé d'enregistrement se termine (fin).

Si le résultat du test effectué dans la sous-étape 20 est positif (et donc si au moins un identifiant est enregistré dans la mémoire MS du calculateur CS), on (le dispositif d'enregistrement DE) effectue une sous-étape 50 destinée à rendre non valide chaque identifiant enregistré et valide qui est stocké dans la mémoire MS du calculateur CS.

Puis, on (le dispositif d'enregistrement DE) effectue dans une sous-étape 60 un autre test pour déterminer si une procédure d'enregistrement ou une procédure de revalidation doit être effectuée pour le dispositif de commande à distance DC présenté.

Si une procédure d'enregistrement doit être effectuée, on (le dispositif d'enregistrement DE) l'effectue dans une sous-étape 70 avec une durée allongée prédéfinie, strictement supérieure à la durée d'une procédure d'enregistrement normale (telle que celle effectuée lors d'une sous-étape 30).

Puis, on (le dispositif d'enregistrement DE) effectue dans une sous-étape 80 un autre test pour déterminer si un nouveau dispositif de commande à distance DC a été présenté via l'outil OE et la prise de diagnostic PD.

Si le résultat du test est négatif, le procédé d'enregistrement se termine (fin).

Si le résultat du test est positif, on (le dispositif d'enregistrement DE) effectue dans une sous-étape 90 un autre test pour déterminer si une procédure d'enregistrement ou une procédure de revalidation doit être effectuée pour le dispositif de commande à distance DC nouvellement présenté via l'outil OE et la prise de diagnostic PD.

Si une procédure d'enregistrement doit être effectuée, on (le dispositif d'enregistrement DE) effectue la sous-étape 30.

En revanche, si une procédure de revalidation doit être effectuée, on (le dispositif d'enregistrement DE) effectue une sous-étape 100. On notera que le dispositif d'enregistrement DE effectue également cette sous-étape 100 lorsque le test effectué lors de la sous-étape 60 requiert une revalidation car l'identifiant du dispositif de commande à distance DC présenté est enregistré dans la mémoire MS du calculateur CS en association avec une valeur non valide de la variable d'état d'utilisation. Dans cette sous-étape 100, le dispositif d'enregistrement DE effectue une procédure de revalidation destinée à faire passer la variable d'état d'utilisation (associée à l'identifiant du dispositif de commande à distance DC présenté) de la valeur non valide à la valeur valide, de sorte que ce dispositif de commande à distance DC puisse de nouveau commander le véhicule V.

Puis, on (le dispositif d'enregistrement DE) effectue de nouveau la sous-étape 80 pour déterminer si un nouveau dispositif de commande à distance DC a été présenté via l'outil OE et la prise de diagnostic PD.

Grâce à l'invention, un voleur est contraint de mettre beaucoup plus de temps qu'auparavant pour réaliser un vol à la souris.

## Revendications

1. Procédé d'enregistrement de dispositif(s) de commande à distance (DC), associé(s) à un identifiant et destiné(s) à commander un véhicule (V), auprès d'un calculateur (CS) de ce dernier (V), **caractérisé en ce qu'**il comprend une étape dans laquelle, en cas de présentation d'un dispositif de commande à distance (DC) et en présence d'au moins un identifiant enregistré et valide dans ledit calculateur (CS), on rend non valide chaque identifiant enregistré et valide, puis, si ledit dispositif de commande à distance (DC) présenté est associé à un identifiant inconnu dudit calculateur (CS), on enregistre cet identifiant dans ce dernier (CS) en effectuant une procédure d'enregistrement pendant une durée allongée prédéfinie, strictement supérieure à une durée d'une procédure d'enregistrement normale effectuée lorsqu'il n'y a aucun identifiant enregistré dans ledit calculateur (CS).

2. Procédé selon la revendication 1, **caractérisé en ce que** ladite durée allongée prédéfinie est comprise entre environ quinze minutes et environ une heure.

3. Procédé selon la revendication 2, **caractérisé en ce que** ladite durée allongée prédéfinie est égale à environ trente minutes.

4. Procédé selon l'une des revendications 1 à 3, **caractérisé en ce que** dans ladite étape, en cas de présentation d'un dispositif de commande à distance (DC) et en l'absence d'identifiant enregistré dans ledit calculateur (CS), on enregistre l'identifiant dudit dispositif de commande à distance (DC) présenté dans ledit calculateur (CS) en effectuant ladite procédure d'enregistrement normale.

5. Procédé selon l'une des revendications 1 à 4, **caractérisé en ce que** dans ladite étape, après avoir rendu non valide chaque identifiant enregistré et valide, on détermine si ledit dispositif de commande à distance (DC) présenté est associé à un identifiant rendu non valide, et, dans l'affirmative, on effectue une procédure de revalidation de manière à rendre de nouveau valide l'identifiant de ce dispositif de commande à distance (DC) présenté.

6. Procédé selon la revendication 5, **caractérisé en ce que** dans ladite étape, en cas de présentation d'un nouveau dispositif de commande à distance (DC) après qu'une procédure de revalidation ait été effectuée, on enregistre l'identifiant dudit nouveau dispositif de commande à distance (DC) présenté dans ledit calculateur (CS) en effectuant ladite procédure d'enregistrement normale.

7. Dispositif d'enregistrement (DE) propre à équiper un calculateur (CS) de véhicule (V) et à enregistrer dans ce calculateur (CS) des dispositifs de commande à distance (DC) associés chacun à un identifiant et destinés à commander ledit véhicule (V), **caractérisé en ce qu'**il est agencé, en cas de présentation d'un dispositif de commande à distance (DC) et en présence d'au moins un identifiant enregistré et valide dans ledit calculateur (CS), pour rendre non valide dans ce dernier (CS) chaque identifiant enregistré et valide, puis, si ledit dispositif de commande à distance (DC) présenté est associé à un identifiant inconnu dudit calculateur (CS), pour provoquer l'enregistrement de cet identifiant dans ce dernier (CS) par déclenchement d'une procédure d'enregistrement pendant une durée allongée prédéfinie, strictement supérieure à une durée d'une procédure d'enregistrement normale effectuée lorsqu'il n'y a aucun identifiant enregistré dans ledit calculateur (CS).

8. Calculateur (CS) pour un véhicule (V) propre à être commandé par au moins un dispositif de commande à distance (DC) associé à un identifiant, **caractérisé en ce qu'**il comprend un dispositif d'enregistrement (DE) selon la revendication 7.

9. Véhicule (V) propre à être commandé par au moins un dispositif de commande à distance (DC) associé à un identifiant, **caractérisé en ce qu'**il comprend un calculateur (CS) selon la revendication 8.

10. Véhicule selon la revendication 9, **caractérisé en ce qu'**il est de type automobile.

## Patentansprüche

1. Verfahren zum Registrieren einer (von) Fernbedienungsvorrichtung(en) (DC), die mit einem Identifikator assoziiert ist (sind) und die dazu bestimmt ist (sind), ein Fahrzeug (V) bei einem Rechner (CS) dieses Letzteren (V) zu steuern, **dadurch gekennzeichnet, dass** es einen Schritt aufweist, bei dem im Fall der Präsentation einer Fernbedienungsvorrichtung (DC) und in Gegenwart mindestens eines registrierten und gültigen Identifikators in dem Rechner (CS), jeder registrierte und gültige Identifikator ungültig gemacht wird, dann, falls die präsentierte Fernbedienungsvorrichtung (DC) mit einem Identifikator assoziiert wird, der dem Rechner (CS) unbekannt ist, dieser Identifikator in diesem Letzteren (CS) registriert wird, indem eine Registrierungsvorgehensweise während einer vordefinierten verlängerten Dauer, die strikt größer ist als eine Dauer einer normalen Registrierungsvorgehensweise, die ausgeführt wird, wenn kein Identifikator in dem Rechner (CS) registriert ist, ausgeführt wird.

2. Verfahren nach Anspruch 1, **dadurch gekennzeichnet, dass** die vordefinierte verlängerte Dauer zwischen etwa fünfzehn Minuten und etwa einer Stunde liegt.

3. Verfahren nach Anspruch 2, **dadurch gekennzeichnet, dass** die vordefinierte verlängerte Dauer gleich etwa dreißig Minuten ist.

4. Verfahren nach einem der Ansprüche 1 bis 3, **dadurch gekennzeichnet, dass** bei dem Schritt im Fall der Präsentation einer Fernbedienungsvorrichtung (DC) und bei Fehlen eines Identifikators, der in dem Rechner (CS) registriert ist, der Identifikator der Fernbedienungsvorrichtung (DC), der in dem Rechner (CS) präsentiert wird, registriert wird, indem die normale Registrierungsvorgehensweise ausgeführt wird.

5. Verfahren nach einem der Ansprüche 1 bis 4, **dadurch gekennzeichnet, dass** bei dem Schritt, nachdem jeder registrierte und gültige Identifikator ungültig gemacht wurde, bestimmt wird, ob die präsentierte Fernbedienungsvorrichtung (DC) mit einem ungültig gemachten Identifikator assoziiert ist, und wenn ja, eine Neuvalidierungsvorgehensweise derart ausgeführt wird, dass der Identifikator dieser präsentierten Fernbedienungsvorrichtung (DC) erneut gültig gemacht wird.

6. Verfahren nach Anspruch 5, **dadurch gekennzeichnet, dass** bei dem Schritt, im Fall einer Präsentation einer neuen Fernbedienungsvorrichtung (DC), nachdem eine Neuvalidierungsvorgehensweise ausgeführt wurde, der Identifikator der neuen Fernbedienungsvorrichtung (DC), die in dem Rechner (CS) präsentiert wird, registriert wird, indem die normale Registrierungsvorgehensweise ausgeführt wird.

7. Aufzeichnungsvorrichtung (DE), die geeignet ist, um einen Rechner (CS) eines Fahrzeugs (V) auszustatten und in diesem Rechner (CS) Fernbedienungsvorrichtungen (DC) zu registrieren, die jeweils mit einem Identifikator assoziiert und dazu bestimmt sind, das Fahrzeug (V) zu steuern, **dadurch gekennzeichnet, dass** sie in dem Fall des Präsentierens einer Fernbedienungsvorrichtung (DC) und in Gegenwart mindestens eines aufgezeichneten und gültigen Identifikators in dem Rechner (CS) zum Ungültigmachen in diesem Letzteren (CS) jedes registrierten und gültigen Identifikators eingerichtet ist, dann, falls die präsentierte Fernbedienungsvorrichtung (DC) mit einem dem Rechner (CS) unbekannten Identifikator assoziiert ist, zum Veranlassen des Registrierens dieses Identifikators in diesem Letzteren (CS) durch Auslösen einer Registrierungsvorgehensweise während einer vorbestimmten verlängerten Dauer, die strikt größer ist als eine Dauer einer normalen Registrierungsvorgehensweise, die ausgeführt wird, wenn kein anderer Identifikator in dem Rechner (CS) registriert ist.

8. Rechner (CS) für ein Fahrzeug (V), der geeignet ist, um von mindestens einer Fernbedienungsvorrichtung (DC), die mit einem Identifikator assoziiert ist, gesteuert zu werden, **dadurch gekennzeichnet, dass** er eine Registrierungsvorrichtung (DE) nach Anspruch 7 umfasst.

9. Fahrzeug (V), das geeignet ist, von mindestens einer Fernbedienungsvorrichtung (DC), die mit einem Identifikator assoziiert ist, gesteuert zu werden, **dadurch gekennzeichnet, dass** es einen Rechner (CS) nach Anspruch 8 umfasst.

10. Fahrzeug nach Anspruch 9, **dadurch gekennzeichnet, dass** es des Typs Kraftfahrzeug ist.

## Claims

1. A method for registering (a) remote control device(s) (DC), associated with an identifier and intended to control a vehicle (V), at a computer (CS) of the latter (V), **characterized in that** it includes a step in which, in the event of presentation of a remote control device (DC) and in the presence of at least one valid registered identifier in said computer (CS), each valid registered identifier is rendered invalid, then, if said presented remote control device (DC) is associated with an unknown identifier of said computer (CS), this identifier is registered in the latter (CS) by carrying out a registration procedure for a predefined lengthened duration, strictly greater than a duration of a normal registration procedure carried out when there is no identifier registered in said computer (CS).

2. The method according to claim 1, **characterized in that** said predefined lengthened duration is comprised between approximately fifteen minutes and approximately one hour.

3. The method according to claim 2, **characterized in that** said predefined lengthened duration is equal to approximately thirty minutes.

4. The method according to one of claims 1 to 3, **characterized in that** in said step, in the event of presentation of a remote control device (DC) and in the absence of an identifier registered in said computer (CS), the identifier of said remote control device (DC) presented in said computer (CS) is registered by carrying out said normal registration procedure.

5. The method according to one of claims 1 to 4, **characterized in that** in said step, after having rendered invalid each registered valid identifier, it is determined if said presented remote control device (DC) is associated with an identifier which has been rendered invalid, and, if this is the case, a revalidation procedure is carried out so as to render valid again the identifier of this presented remote control device (DC).

6. The method according to claim 5, **characterized in that** in said step, in the case of presentation of a new remote control device (DC) after a revalidation procedure has been carried out, the identifier of the new presented remote control device (DC) is registered in the computer (CS) by carrying out said normal registration procedure.

7. A registration device (DE) suitable to equip a computer (CS) of a vehicle (V) and to register in this computer (CS) remote control devices (DC) each associated with an identifier and intended to control said vehicle (V), **characterized in that** it is arranged, in the event of presentation of a remote control device (DC) and in the presence of at least one valid registered identifier in said computer (CS), to render invalid in the latter (CS) each valid registered identifier, then, if said presented remote control device (DC) is associated with an unknown identifier of said computer (CS), to cause the registration of this identifier in the latter (CS) by triggering a registration procedure during a predefined lengthened duration, strictly greater than a duration of a normal registration procedure carried out when there is no identifier registered in said computer (CS).

8. A computer (CS) for a vehicle (V) suitable to be controlled by at least one remote control device (DC) associated with an identifier, **characterized in that** it includes a registration device (DE) according to claim 7.

9. A vehicle (V) suited to be controlled by at least one remote control device (DC) associated with an identifier, **characterized in that** it includes a computer (CS) according to claim 8.

10. The vehicle according to claim 9, **characterized in that** it is of automobile type.
